(19) Europäisches Patentamt
European Patent Office
Office européen des brevets

(11) **EP 2 755 364 A1**

(12) **EUROPEAN PATENT APPLICATION**

(43) Date of publication:
**16.07.2014 Bulletin 2014/29**

(51) Int Cl.:
*H04L 29/06* (2006.01)          *H04L 9/32* (2006.01)

(21) Application number: **13305025.2**

(22) Date of filing: **11.01.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ST-Ericsson SA**
**1228 Plan-les-Ouates (CH)**

(72) Inventors:
- **Sibert, Hervé**
  **72000 Le Mans (FR)**
- **Stahl, Per**
  **218 51 Klagshamn (SE)**

(74) Representative: **Cabinet Plasseraud**
**52, rue de la Victoire**
**75440 Paris Cedex 09 (FR)**

(54) **Authentication systems**

(57)     A method of authenticating an agent to a secure environment of a device, in a challenge-response authentication system comprising the device, a remote authentication server and a connection path between the device and the remote authentication server, the method comprising:
while the connection path is not established:
- obtaining a predictable challenge based on at least a current value of a counter;
- obtaining a response for the challenge; and,
- authenticating the agent to the secure environment based on at least the response; and,

wherein, upon successful authentication, the value of the counter is incremented.
    A challenge-response authentication system and an apparatus are also claimed.

FIG. 3

EP 2 755 364 A1

**Description**

**Technical Field**

The proposed solution relates generally to authentication systems, and more particularly to data encryption and authentication with a secure environment.

**Background Art**

Today, many electronic devices such as smartphones, tablets or smart TVs handle sensitive data, like credit card's security numbers, digital rights management (DRM) counters, passwords and cryptographic keys of the devices.
They also run a large number of potentially malicious applications of low trustworthiness that can extract, for instance, the cryptographic keys to inject malicious codes or to replace them in order to gain control over the device.
In this context, more and more devices are designed to host several hardware-isolated execution environments wherein, for instance, a secure environment supports the protected execution of security-sensitive applications while a non-secure environment enables the encapsulated execution of less critical applications.
Security-sensitive applications, such as initialisation or configuration functions, may have an exclusive access, for instance, to the cryptographic keys of the device that are mainly used.
This contributes to guaranteeing that critical data, such as configuration files, are protected against modification and deletion in unauthorised ways by malicious codes and virus programs.
Therefore, access to these security-sensitive applications from outside the secure environment should be prevented. Otherwise one could use them, for instance, to regenerate a valid configuration, different from the original one, without the corresponding permissions.
Usually, an agent such as an end-user or an application has to prove to the device that he has the right to access the secure environment.
To that end, for instance, a challenge-response authentication system may be used throughout the authentication operation.
For example a permanent link may exist to enable back and forth phases between the device, which is capable of generating a challenge, and a remote authentication server, which is capable of generating the response to the challenge.
However, during production of devices and maintenance/rework of already produced devices, for instance, the required permanent link between the devices and the remote authentication server may not be available, thus rendering impossible the access to the secure environment, in order e.g. to configure or to reconfigure a bunch of devices.
To summarize, authentication of an agent to a secure environment of a device while there is no permanent link between the device and the remote authentication server in a challenge-response authentication system is not adequately addressed by known techniques.

**Summary**

The proposed solution allows alleviating the above drawback by providing a challenge-response authentication system which can be used while no permanent link exists between a device and a remote authentication server.
According to a first aspect, there is thus proposed a method of authenticating an agent to a secure environment of a device, in a challenge-response authentication system comprising the device, a remote authentication server and a connection path between the device and the remote authentication server, the method comprising:

while the connection path is not established:

- obtaining a predictable challenge based on at least a current value of a counter stored in one single memory unit of a programmable read-only memory of the secure environment;
- obtaining a response for the challenge; and,
- authenticating the agent to the secure environment based on at least the response obtained for the challenge; and,
  wherein, upon successful authentication, the value of the counter stored in the single memory unit is incremented.

A second aspect relates to a challenge-response authentication system comprising a device, a remote authentication server and a connection path between the device and the remote authentication server, the system comprising:

- the device comprises a secure environment having therein:

- a programmable read-only memory;
- a physically unalterable key of the device; and,

- a public key of the device associated with a private key of the remote authentication server or a secret key of the device, known to the remote authentication server or derivable from a root secret key of the remote authentication server;
- the remote authentication server comprises:

- a private key of the remote authentication server associated with the public key of the device or the secret key; wherein the connection path is not established while it is performed:
- the obtaining of a challenge corresponding to a predictable challenge, based on at least a current value of a counter stored in one single memory unit of the programmable read-only memory;
- the obtaining of a response for the challenge; and,
- the authentication an agent to the secure environment based on at least the response obtained for the challenge; and,
  wherein, upon successful authentication, the value of a counter stored in a single memory unit of the programmable read-only memory is incremented.

A third aspect relates to an apparatus for authenticating an agent to a secure environment of a device, according to the first aspect, in a challenge-response authentication scheme according to the second aspect, the apparatus comprising:

- a trusted challenge generator configured to:

- receive a challenge request from a challenge requester, for obtaining the challenge; and,
- transmit the challenge to the requester in response to the challenge request;

- a trusted authentication enabler configured to:

- receive an access request from a access requester, for obtaining access to the secure environment;
- transmit an access request answer to the access requester, in response to the access request; and,
- increment the current value of the single memory unit of the programmable read-only memory, upon successful authentication.

Thus, in embodiments of the proposed solution, a permanent connection path between the device and the server is no longer necessary throughout the authentication operation since the challenge is predictable such that the corresponding response may be requested a later time in the future.

This provides flexibility, for instance, for production and maintenance or rework of already produced devices.

This also enhances security of the system, since it is possible to control, for instance at the remote authentication server, the access to the private key.

In fact, a request for a challenge response may contain the unique identifier of the device such as the International Mobile Equipment Identity (IMEI) that can be used to monitor the authentication activities performed for a particular device.

In one embodiment, the challenge is obtained in the device and is further based on, at least a physically unalterable key of the device, only known to the device and accessible to the secure environment.

In another embodiment, the challenge is obtained in the remote authentication server and is further based on, at least a unique device identifier of the device that is publicly available.

In yet another embodiment, the challenge is further based on, at least a hash algorithm and a constant value.

Possibly, the challenge is a Message Authentication Code, MAC.

In another embodiment, the challenge is obtained from an object stored in the secure environment of the device or in the remote authentication server, wherein the object may comprise:

- the challenge;
- the current value of the counter stored in the single memory unit; and,
- a unique device identifier of the device that is publicly available.

In yet another embodiment, the challenge is obtained from an object stored in the secure environment of the device, wherein the object may comprise:

- the challenge;
- the current value of the counter stored in the single memory unit; and,
- a unique authentication code based on an individual chip key, only known to the device and accessible to the secure environment.

If required, the object is protected from access by an asymmetric or symmetric cryptography system.

In accordance with an embodiment of the proposed solution, the response is obtained in the remote authentication server based on the challenge and further based on, at least:

- a private key of the remote authentication server associated with a public key of the device; or
- a secret key of the device, known to the remote authentication server, or derivable from a root secret key of the remote authentication server.

Possibly, the response corresponds to a signed version of the challenge with the private key or a signed version of the challenge with the secret key.

In one embodiment, successful authentication of the agent to the secure environment is determined by verifying the response, i.e., verifying the signature of the challenge received in the response, with at least the public key or the secret key, depending on which key was used to sign it.

**Brief description of drawings**

A more complete understanding of the proposed solution may be obtained from a consideration of the following description in conjunction with the drawings, in which like reference numbers indicate same or similar elements. In the drawings:

FIG. 1 is a block diagram illustrating a prior art implementation of a challenge-response authentication system;

FIG. 2 is a block diagram illustrating embodiments according to a first phase of the proposed solution;

FIG. 3 is a block diagram illustrating embodiments according to a second phase of the proposed solution;

FIG. 4A-4B are block diagrams illustrating embodiments according to a third phase of the proposed solution;

FIG.5 is a flow chart illustrating embodiments according to the proposed solution.

FIG. 6 is a block diagram illustrating embodiments according to a combination of first and second phases of the proposed solution.

**Description of embodiments**

Challenge-Response authentication system may be based on asymmetric cryptography systems, such as PGP (Pretty Good Privacy) which involve the use of two cryptographic keys:

- a public key, which is widely distributed; and,
- a private key, which is kept secret.

The pair of keys may be used, for instance in a device, to:

- protect media content, such as videos;
- encrypt data storage, such as bootable operating system partitions; and,
- protect the device from unauthorised access.

In order to authenticate an agent in a challenge-Response authentication system, the private key is used to create a signature of a challenge and the public key is used to verify that signature of the signed challenge.

Thus, authentication is granted if the latter verification is successful.

As the private key is never disclosed (i.e. it never gets sent wirelessly or over the wire) there is no opportunity for an attacker to intercept the private key and use it for malicious purposes.

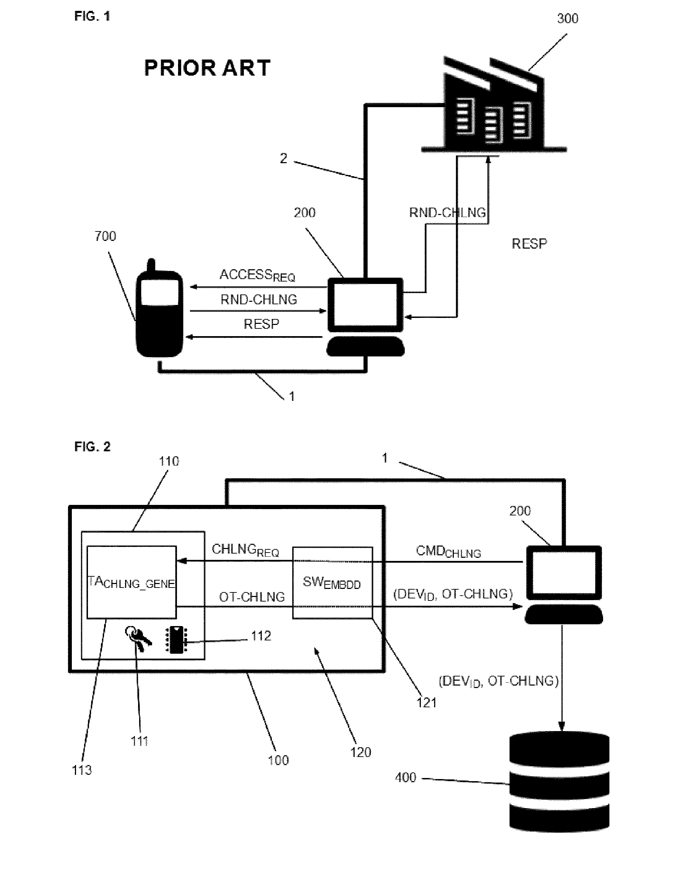

FIG. 1 is a block diagram illustrating schematically a prior art implementation of a challenge-response authentication system using asymmetric cryptography system in order to authenticate an agent to a mobile phone 700.

In the system of FIG. 1, there is shown therein the mobile phone 700, a computing device 200 and a remote authentication server 300.

The computing device 200, such as laptop, a desktop PC, a tablet, a maintenance station or a production station, is arranged to establish a permanent link between the mobile phone 700 and the remote authentication server 300 during the authentication operation.

Namely, during authentication, the computing device 200 is connected at the same time to the mobile phone 700 via a first connection path 1, and also to the remote authentication server 300, via a second connection path 2.

The first connection path 1 may be, for instance, a USB connection path or a micro USB connection path.

Therefore, one should understand that the mobile phone 700 and the computing device 200 are generally located at the same location in direct proximity, since the first connection path 1 may be short in length (i.e. less than five meters).

The second connection path 2 is a secure connection path such as a VPN connection path. Namely, the computing device 200 is required to authenticate to the remote authentication server 300 in order to establish the connection path 2, for instance by entering a login and a password.

Therefore, one should understand that the computing device 200 and the remote authentication server 300 are generally located at the different locations, since the second connection path 2 may be long in length (i.e. more than several km).

The mobile phone 700 comprises the public key and the remote authentication server 300 comprises the private key wherein both keys form a pair of key of an asymmetric cryptography system.

Referring to FIG. 1, and during authentication of an agent to the mobile phone 700, the following phases are carried out:

- a permanent link comprising the first connection 1 and the second connection path 2 is established between the mobile phone 700 and the remote authentication server via the computing device 200;
- a request (ACCESS$_{REQ}$) is made by the computing device 200 to authenticate an agent to the mobile phone 700;
- the mobile phone 700 sends to the computing device 200 a randomly-generated challenge (RND-CHLNG) that is further transferred to the remote authentication server 300;
- the remote authentication server 300 digitally signs the randomly-generated challenge (RND-CHLNG) with the private key;
- the remote authentication server sends to the computing device 200 the digitally signed randomly-generated challenge (RESP) that is transferred to the mobile phone 700; and,
- the mobile phone 700 verifies the signature of the digitally signed randomly-generated challenge (RESP) with the public key
- the mobile phone 700 grants the access to the agent if the verification is successful.

One of the drawbacks seen in the prior art procedure is with regard to the required permanent link between the mobile phone 700 and the remote authentication server 300.

In fact, for instance, the connection path 2 may not be available in certain areas due to network issues such as congestion at peak times, network failure, or other errors.

Hence, during production of mobile phones 700 and/or maintenance/rework of already produced mobile phones 700, it could be impossible to access to the secure environment of these mobiles phones 700, for instance, to perform configuration of reconfiguration of the mobiles phones 700.

This is problematic for the production of mobiles phones 100, for instance, when a mobile phone manufacturer has to personalise a bunch of mobile phones 700 with a specific configuration of a mobile operator (e.g. locking the phone to the network of the mobile operator, installing specific software of the mobile operator).

In fact, if the second connection path 2 is not available, no work can be done and the mobile operator may not be delivered on time.

This is also problematic for maintenance/rework of already produced mobile phones 700 since without the second connection path 2, no work can be done and customers could not be served on time.

For instance, also, even when the second connection path 2 is available, a number of security issues may arise as well.

This is mainly due to the fact that the remote authentication server is always on and signs whatever random challenge (RND-CHLNG) that is presented at its input, as long as the permanent link exists, such that it is not possible, for instance, to know for which device a random challenge has been signed.

In fact, in mobile care offices, where maintenance/rework of already produced mobile phones 700 may be performed, the second connection path 2 may be hijacked by unauthorised users, malicious codes and virus programs in order to gain access to the remote authentication server 300.

Thus, those unauthorised users, malicious codes and virus programs may use the private key to sign challenges for their own mobile phones 700 in an uncontrolled manner.

This leaves a lot of room for illegal activities such as in the field of device unlocking services often found, for instance, on the Internet.

The proposed solution aims at alleviating at least some of the above problems.

One of the possible solutions to these problems may be to move the private keys associated with corresponding public keys of the mobile phones 700 as close as possible to the device, for example, in the computing device 200, such that the second connection path 2 is no longer necessary and only the first connection path 1 would be necessary.

Unfortunately, such solution would jeopardize the overall security of the challenge-response authentication system, since the private key is supposed to be kept secret and may be stolen by unauthorised users, malicious codes and virus programs and reuse illegally as already described above.

Another solution may consist in using a static challenge-response authentication system wherein the challenge is static (i.e. constant for a given device over time) instead of using a challenge-response authentication system wherein the challenge is random and therefore changed for every request (ACCESS$_{REQ}$) as already explained above.

This way, when a response to a challenge has been provided, once, for given device, there is no further need to request it again and there is no further need of the second connection path 2.

Unfortunately, again, such solution that was used in first generation of banking smartcard is highly sensitive to replay attacks once the challenge or the response to the challenge has been stolen by unauthorised users, malicious codes and virus programs.

Yet another solution may consist in using static control lock keys, such as SIM-lock unlock codes, that need to be entered directly onto the phone, such that the connection path 2 is no longer necessary and only the first connection path 1 would be necessary.

Unsatisfactorily, such solution brings the same issue as in the previous solution.

Embodiments of the proposed solution may be based on a challenge-response authentication system wherein a permanent link between a device and a remote authentication server is not necessary if the challenge could be predicted such that the corresponding response to the challenge may be requested at later time in the future.

This way, in one embodiment of the proposed challenge-response authentication system may be split into, at least the following phases:

- a first phase, wherein, at least, the challenge is obtained where the first connection path 1 is established and the second connection path 2 is not established;
- a second phase, wherein the response to the challenge is obtained where the first connection path 1 is not established and the second connection path 2 is established; and,
- a third phase, wherein the response is presented, to authenticate an agent to the device, where the first connection path 1 is established and the second connection path 2 is not established.

In order to predict the next challenge, the latter may be deterministic.

However, the next challenge, even being deterministic, may not be static over time, otherwise the system would be sensitive to attacks such as replay attacks as already described above.

This is why the challenge of the proposed solution is a one-time challenge that is deterministic and non-static.

Namely, the challenge of the proposed solution is a predictable challenge that may be used successfully for authenticating only once, meaning that once authentication with a predictable challenge has succeeded, the corresponding challenge is no longer used by the device

This way, the proposed challenge may always be the same until the right response is provided. Then, the next challenge that would be different from the previous one may also always be the same until the right response is provided, and so on.

Additionally, a predicted challenge of the proposed solution may be unique for a particular device.

FIG. 2 is a block diagram illustrating schematically an embodiment according to the first phase of the proposed solution, as already described above.

In FIG. 2, there is shown therein a device 100, a computing device 200 and a challenge database 400.

The device 100 may be an electronic device such as a mobile phone, a smartphone, a tablet or a smart TV.

The device 100 may comprise at least a secure environment 110 to support the protected execution of security-sensitive applications and a non-secure environment 120 that enables the encapsulated execution of less critical applications.

The secure environment 110 may comprise a physically unalterable key 111, a programmable read-only memory 112 and challenge-generator trusted application (TA$_{CHLNG\_GENE}$).

The physically unalterable key 111 may be specific to a given device 100 such that among a bunch of devices 100, none has the same physically unalterable key 111. In the literature, it may be known as a "hardware unique key" (HUK). Also, it may only be known to the device 100 and accessible to the secure environment 110.

The programmable read-only memory 112 may be a non-volatile memory which does not lose its content when the supplying power is cut off.

A typical programmable read-only memory 112 may be organised in one or more memory units, each memory unit having a fixed sized group of bits (also known as a "word" in the literature and hereinafter called a memory unit).

A memory unit may, for instance, have a size of 16 bits, 24 bits and 32 bits.

The setting of each bit of a memory unit of the programmable read-only memory 112 may be programmed (i.e. changed) just once, meaning that data cannot be added or erased.

Typically, when the programmable read-only memory 112 leaves the factory and is delivered, for instance, to a customer, all bits are either set to 1 or to 0.

Hence, for a configuration wherein all bits are initially set to 1, the programming a bit of memory unit (also known as "burning") would change, irreversibly, the state of the bit from 1 to 0.

Conversely, for a configuration wherein all bits are set to 0, burning a bit of memory unit would change, irreversibly, the state of the bit from 0 to 1.

Therefore, based on the above principle, the programmable read-only memory 112 (also known as "one-time programmable memory", OTP) may be used as a counter.

For instance, with a memory unit size of 32 bits, the programmable read-only memory 112 may be able to represent 32 different values.

Referring to FIG. 2, the challenge-generator trusted application ($TA_{CHLNG\_GENE}$) is arranged to, at least:

- receive a challenge request ($CHLNG_{REQ}$) from an agent such as a challenge requester, for obtaining a one-time challenge (OT-CHLNG); and,
- transmit the one-time challenge (OT-CHLNG) to the challenge requester.

In one embodiment, the challenge requester may be located in the secure environment 110.

In another embodiment, the challenge requester may be located in the non-secure environment 120.

Referring to FIG. 2, the non-secure environment 120 may comprise an embedded application $SW_{EMBDD}$ controlled by the computing device 200. It may also comprise a non-volatile memory such as a flash disk (not shown) to store, for instance, data and/or applications.

The embedded application ($SW_{EMBDD}$) is arranged to, at least:

- send a challenge request ($CHLNG_{REQ}$) to the challenge-generator trusted application ($TA_{CHLNG\_GENE}$), for obtaining a one-time challenge (OT-CHLNG);
- receive the one-time challenge (OT-CHLNG) from the challenge-generator trusted application ($TA_{CHLNG-GENE}$); and,
- forward the one-time challenge (OT-CHLNG) to the computing device 200 along with a unique device identifier ($DEV_{ID}$) of the device 100.

For instance, the embedded application ($SW_{EMBDD}$) may be located on a non-volatile memory of the device 100, such as a Secure (SD) memory card or a micro-SD memory card.

Referring to FIG. 2, the computing device 200, such as laptop, a desktop PC, a tablet, a maintenance station or a production station, is connected to the device 100 via the first connection path 1.

The first connection path 1 may be, for instance, a USB connection path or a micro USB connection path.

Therefore, one should understand that device 100 and the computing device 200 are generally located at the same location in direct proximity, since the first connection path 1 may be short in length (i.e. less than five meters).

The computing device 200 may further be arranged to:

- communicate with the device 100 via the first connection path 1; and,
- store into the challenge database 400, at least, the one-time challenge (OT-CHLNG).

Additionally, the unique device identifier ($DEV_{ID}$) of the device 100, such as the International Mobile Equipment Identity (IMEI), may be stored, as well, into the challenge database 400 along with the one-time challenge (OT-CHLNG), thus creating records of the challenge database 400 comprising pairs of unique device identifier associated with corresponding one-time challenge ($DEV_{ID}$, OT-CHLNG).

The challenge database 400 may be a database of any type such as a relational database, a hierarchical database, an object oriented database, or a XML database.

The database is used to store, at least, data provided by the computing device 200 as already described above.

The challenge database 400 may be located onto the computing device 200 or onto another computing device on a network to which the computing device 200 is connected to.

In the following it is described in further detail the method of FIG. 2.

In one embodiment, the following phases may be carried out in order to obtain the one-time challenge (OT-CHLNG):

- the computing device 200 sends to the embedded application ($SW_{EMBDD}$) a challenge command ($CMD_{CHLNG}$) to command the request of a one-time challenge (OT-CHLNG);

- the embedded application ($SW_{EMBDD}$) sends to the challenge-generator trusted application ($TA_{CHLNG\_GENE}$) a challenge request ($CHLNG_{REQ}$), in response to the challenge command ($CMD_{CHLNG}$), for obtaining a one-time challenge (OT-CHLNG);
- the challenge-generator trusted application ($TA_{CHLNG\_GENE}$) sends to the embedded application ($SW_{EMBDD}$) the one-time challenge (OT-CHLNG), in response to the challenge request ($CHLNG_{REQ}$);
- the embedded application ($SW_{EMBDD}$) forwards to the computing device 200, the one-time challenge (OT-CHLNG) along with the associated unique device identifier ($DEV_{ID}$) of the device 100; and,
- the computing device 200 stores into the challenge database 400 the pair of unique device identifier associated with corresponding one-time challenge ($DEV_{ID}$, OT-CHLNG).

As already described above, the one-time challenge (OT-CHLNG) may be predicted but may only be played once. Also, it may be unique for a particular device 100.

For instance, the challenge-generator trusted application ($TA_{CHLNG\_GENE}$) may use a Message Authentication Code (MAC) operation to generate the one-time challenge (OT-CHLNG). Therefore the one-time challenge (OT-CHLNG) may be a MAC.

The MAC (also known as "Integrity Check value" or "cryptographic checksum") operation may be based on:

- a hash function such as Message-Digest Algorithm (MD5), Secure Hash Algorithm (SHA) or Keyed-hash message authentication codes (HMAC);
- the physically unalterable key 111 of the device 100 or the unique device identifier ($DEV_{ID}$) of the device 100, in order for the one-time challenge (OT-CHLNG) to be unique for a particular device 100;
- a constant message such as string in order to distinguish the MAC of the challenge-generator trusted application ($TA_{CHLNG\_GENE}$) from other MACs that may be calculated on the device 100 based on the physically unalterable key 111. For instance, a string (e.g. "one-time challenge generation") may be used as the constant message for generating the one-time challenge (OT-CHLNG); and,
- a memory unit of the programmable read-only memory 112 used as counter in order to guarantee that the one-time challenge (OT-CHLNG) is different every time the counter is incremented upon successful authentication.

Hence, the generation of the one-time challenge (OT-CHLNG) may be expressed as follows:

$$\text{OT-CHLNG} = \text{MAC}(\text{hash\_fct}, \{\text{huk or imei}\}, \text{cst\_msg}, \text{w\_otp}) \qquad (1)$$

wherein:

- OT-CHLNG is the one-time challenge;
- hash_fct is the hash function;
- huk is the physically unalterable key 111;
- imei is the unique device identifier ($DEV_{ID}$):
- cst_msg is the constant message;
- w_otp is the memory unit of the programmable read-only memory 112.

Additionally, the one-time challenge (OT-CHLNG) may be encrypted with algorithms such as Data Encryption Standard (DES) or Advanced Encryption Standard (AES) in order to prevent unauthorized reading of the one-time challenge (OT-CHLNG) thus ensuring both data privacy and integrity during storage in the challenge database 400 or during transmission.

The challenge database 400 does not contain any sensitive data since it may contain only pairs of unique device identifier associated with corresponding one-time challenge ($DEV_{ID}$, OT-CHLNG).

In fact, the MAC operation may be irreversible such that the knowledge of the one-time challenge (OT-CHLNG) alone may not be used to retrieve the data that have been used to generate the one-time challenge (OT-CHLNG), such as the physically unalterable key 111.

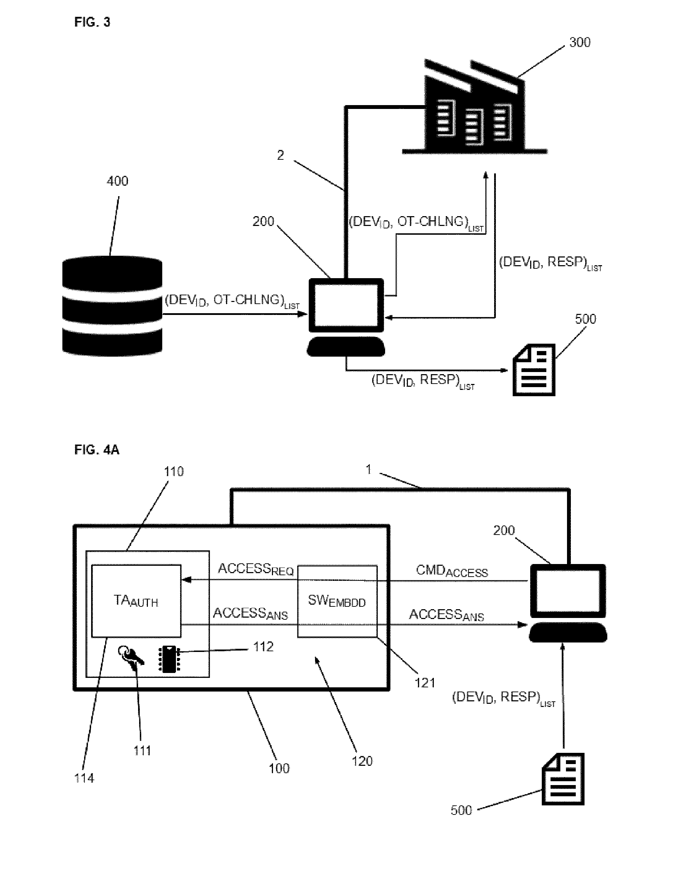

FIG. 3 is a block diagram illustrating schematically an embodiment according to the second phase of the proposed solution, as already described above.

In FIG. 3, there is shown therein the computing device 200 and the challenge database 400 as already described above and it is also shown therein a remote authentication server 300.

The remote authentication server 300 may comprise a signature key (not shown) of the response to a one-time challenge (OT-CHLNG) which may be associated with a verification key (not shown) of the device 100 used to verify the message, both keys being part of a cryptography system.

For instance, in an asymmetric cryptography system, the signature key may be a public key and the verification key may be a private key as already described above.

In this case, the private key may never leave the remote authentication server 300 for the security reasons already explained above.

For instance, also in a symmetric cryptography system, the signature key and the verification key may both be equal to a secret key (not shown) of the device 100, wherein the secret key is known to the remote authentication server 300 or derivable from a root secret key (not shown) of the remote authentication server 300.

Thereinafter, it would be considered as an example, the case of an asymmetric cryptography system. However, it is also in the scope of the proposed solution to consider the case of a symmetric cryptography system or other cryptography systems.

Referring to FIG. 3, the computing device 200 may be connected to the remote authentication server 300 via the second connection path 2.

The second connection path 2 may be a secure connection path such as a VPN connection path. Namely, the computing device 200 may be required to authenticate to the remote authentication server 300 in order to establish the second connection path 2, for instance by entering a login and a password.

The second connection path 2 may also be a non-secure connection (e.g. Internet) such as connection through the Internet. Namely, an email could be used to interact with the remote authentication server 300.

Therefore, one should understand that the computing device 200 and the remote authentication server 300 may generally be located at the different locations, since the second connection path 2 may generally be long in length (i.e. more than several km).

In the following it is described in further detail the method of FIG. 3.

In one embodiment, the following phases are carried out in order to obtain the challenge response (RESP) corresponding to the one-time challenge (OT-CHLNG) obtained in the first phase of the proposed solution:

- the computing device 200 sends to the remote authentication server 300 a challenge list $((DEV_{ID}, OT\text{-}CHLNG)_{LIST})$, retrieved from the challenge database 400 pairs of unique device identifier associated with corresponding one-time challenge $(DEV_{ID}, OT\text{-}CHLNG)$ that are requesting a response, respectively;
- the remote authentication server 300 sends to the computing device 200 a response list $((DEV_{ID}, RESP)_{LIST})$ corresponding to a list of the response (RESP) to each one-time challenge (OT-CHLNG) of the challenge list $((DEV_{ID}, OT\text{-}CHLNG)_{LIST})$;
- the computing device stores the response list $((DEV_{ID}, RESP)_{LIST})$ into a response file 500.

The challenge list $((DEV_{ID}, OT\text{-}CHLNG)$

$_{LIST})$ may contain one or more pairs of unique device identifier associated with corresponding one-time challenge $(DEV_{ID}, OT\text{-}CHLNG)$.

As already described above, the second connection path 2 may be a non-secure connection path, thus the challenge list $((DEV_{ID}, OT\text{-}CHLNG)_{LIST})$ and the response list $((DEV_{ID}, RESP)_{LIST})$ may be sent, for instance, by email over the Internet.

A response (RESP) corresponding to a one-time challenge (OT-CHLNG) may be generated by the remote authentication server 300, for instance, by signing the one-time challenge (OT-CHLNG) with the private key of the remote authentication server 300.

Hence, the generation of response (RESP) may be expressed as follows:

$$r = sign\_Priv(c)\ (2)$$

wherein:

- r is the challenge response (RESP) ;
- sign_Priv is a signature function with the private key of the remote authentication server 300;
- c is the one-time challenge (OT-CHLNG) associated with the unique device identifier $(DEV_{ID})$ of a device 100.

The response file 500 comprising the response list $((DEV_{ID}, RESP)_{LIST})$ may be, for instance, a text file or database of any type such as a relational database, a hierarchical database, an object oriented database, or a XML database.

The response file 500 may be located onto the computing device 200 or onto another computing device on a network to which the computing device 200 is connected to.

FIG. 4A is a block diagram illustrating schematically an embodiment according to the third phase of the proposed solution, as already described above.

In FIG. 4A, there is shown therein the device 100, the computing device 200 and the response file 500 as already described above.

The device 100 may further comprise an authentication trusted application ($TA_{AUTH}$) located in the secure environment 110, that is arranged to, at least:

- receive an access request ($ACCESS_{REQ}$) from an access requester, for obtaining access to the secure environment 110; and,
- transmit an access request answer ($ACCESS_{ANS}$) to the access requester in response to the access request ($ACCESS_{REQ}$).

In one embodiment, the access requester may be located in the secure environment 110.

In another embodiment, the access requester may be located in the non-secure environment 120.

In the following it is described in further detail the method of FIG. 4A

In one embodiment, the following phases may be carried out in order to authenticate an agent to the secure environment 110:

- the computing device 200 sends to the command the embedded application ($SW_{EMBDD}$) an access command ($CMD_{ACCESS}$) to command the access to the secure environment 110;
- the embedded application ($SW_{EMBDD}$) sends to the authentication trusted application ($TA_{AUTH}$) an access request ($ACCESS_{REQ}$), in response to the access command ($CMD_{ACCESS}$), for obtaining access to the secure environment 110;
- the authentication trusted application ($TA_{AUTH}$) to the embedded application ($SW_{EMBDD}$) sends an access request answer ($ACCESS_{ANS}$), in response to the access request ($ACCESS_{REQ}$)
- the embedded application ($SW_{EMBDD}$) forwards to the computing device 200, the access request answer ($ACCESS_{ANS}$).

The access command ($CMD_{ACCESS}$) and the access request ($ACCESS_{REQ}$) may comprise the challenge response (RESP) corresponding to the unique device identifier ($DEV_{ID}$) of the device 100 that may be retrieved from the response list 500.

In order to authenticate the agent to the device 100, the authentication trusted application ($TA_{AUTH}$) may carry out the following phases:

- the challenge-generator trusted application ($TA_{CHLNG\_GENE}$) regenerates the one-time challenge (OT-CHLNG) that is the same as the one that was provided to the embedded application ($SW_{EMBDD}$) in the first phase of the proposed solution as already described above;
- the challenge response (RESP) corresponding to the unique device identifier ($DEV_{ID}$) of the device 100 represents the signature of the challenge and is verified using the public key and the regenerated challenge (OT-CHLNG).

Thus, a successful access request answer ($ACCESS_{ANS}$) may be granted if the verification of the signature (RESP) is successful.

Hence, the determination of the access request answer ($ACCESS_{ANS}$) may be expressed as follows:

$$\text{Verif\_Publc } (r, c) = \{OK; NOK\} \quad (2)$$

wherein:

- r is the challenge response (RESP) corresponding to the unique device identifier ($DEV_{ID}$) of the device 100, for instance, retrieved from the response list 500;
- c is the regenerated challenge (OT-CHLNG); and,
- Verif_Pblc is a verification function providing the access request answer ($ACCESS_{ANS}$) that can take an OK value (i.e. access granted) or NOK value (i.e. access denied), depending on the result of the signature verification.

If a successful access request answer (i.e. OK) is granted, then the memory unit of the programmable read-only memory 112 is incremented.

Hence, for a 16 bits memory unit wherein all bits of are set to 0 out of the factory, a bit of the memory unit would be burned after authenticating as it follows, for instance,:

0000000000000000 :     beforeauthenticating;
1000000000000000 :     after authenticating.

This way, the next one-time challenge (OT-CHLNG) that would be generated by the challenge-generator trusted application ($TA_{CHLNG\_GENE}$) in response to a further challenge request ($CHLNG_{REQ}$) from the embedded application ($SW_{EMBDD}$), would be different than the previous ones.

In fact, as already described above, the one-time challenge (OT-CHLNG) is based, at least, on the value of the counter stored in the memory unit of the programmable read-only memory 112.

In one embodiment, after authentication is granted, one could obtain from the challenge-generator trusted application ($TA_{CHLNG\_GENE}$) one or more of the subsequent one-time challenges (OT-CHLNG) in order to store them, for instance, into the challenge database 400 as already described above.

This could be used in order to avoid performing several times the first phase of the proposed solution in order to obtain several one-time challenges (OT-CHLNG). Thus, with this option a single access to the secure environment 110 enables to retrieve the subsequent one-time challenges (OT-CHLNG).

This may be done by having the challenge-generator trusted application ($TA_{CHLNG-GENE}$) generating the subsequent one-time challenges (OT-CHLNG) by considering the future values of the memory unit of the programmable read-only memory 112.

For instance, let's consider that current value of the above-mentioned 16 bits memory unit of the programmable read-only memory 112 is expressed in decimal notation as being 12.

Therefore, the next possible values that could be taken would be 13, 14, 15 and 16. Using this knowledge, one could generate four future one-time challenges (OT-CHLNG) by considering these four possible values of the memory unit of the programmable read-only memory 112.

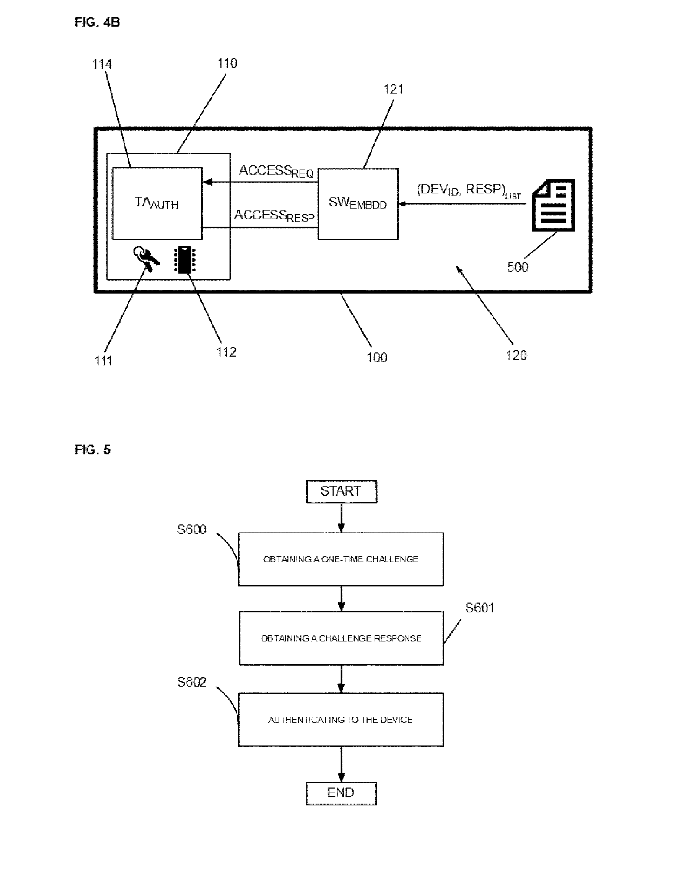

FIG. 4B is a block diagram illustrating schematically another embodiment according to the third phase of the proposed solution, as already described above.

In FIG. 4B, there is shown therein the device 100, and the response file 500 as already described above.

The response file 500 is located in the non-secure environment 120 of the device 100.

For instance, the response file 500 may be located on a non-volatile memory of the device 100, such as a Secure (SD) memory card or a micro-SD memory card.

The embedded application ($SW_{EMBDD}$) may further have a user interface such as graphical user interface (GUI) available on a display (not shown) of the device 100.

This way, an access request ($ACCESS_{REQ}$) may be triggered, for instance, by pressing a graphical button of the GUI of the embedded application ($SW_{EMBDD}$).

The access request ($ACCESS_{REQ}$) may comprise the challenge response (RESP) corresponding to the unique device identifier ($DEV_{ID}$) of the device 100 that may be retrieved from the response list 500.

Referring to FIG. 4B, the subsequent interactions between the authentication trusted application ($TA_{AUTH}$) and the embedded application ($SW_{EMBDD}$) until authentication may be similar to those already described in FIG. 4A.

FIG. 5 is a flow chart illustrating embodiments according to the proposed solution.

In S600, it is obtained a one-time challenge (OT-CHLNG) as already described above regarding the first phase of the proposed solution.

In S601, it is obtained a challenge response (RESP) corresponding to the one-time challenge (OT-CHLNG) as already described above regarding the second phase of the proposed solution.

In S602, authentication of an agent to the device 100 is performed based on the challenge response (RESP) corresponding to the one-time challenge as already described above regarding the third phase of the proposed solution.

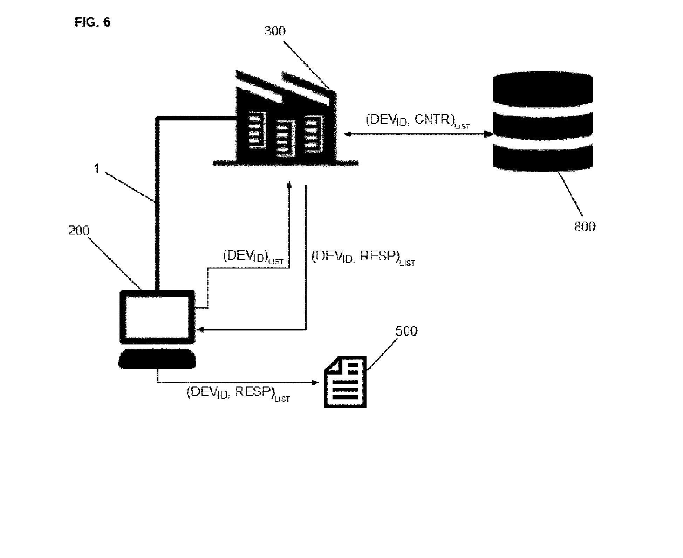

FIG. 6 is a block diagram illustrating schematically yet another embodiment according to a combination of the first and second phase of the proposed solution, as already described above.

In FIG. 6, there is shown therein the computing device 200, the remote authentication server 300 and the response list 500 as already described above and it is also shown therein a counter database 800.

The computing device 200 may be connected to the remote authentication server 300 as already described above.

The counter database 800 may be a database of any type such as a relational database, a hierarchical database, an object oriented database, or a XML database.

The counter database 800 may be located onto the remote authentication server 300 or another server on a network to which the remote authentication server 300 is connected to.

The counter database 800 may be used to store, at least, data provided by the remote authentication server 300 such as pairs of unique device identifier associated with corresponding counter value ($DEV_{ID}$, CNTR). A counter (CNTR) may be for instance a value of the counter stored in the memory unit of a programmable read-only memory 112 of the secure environment 110 a device 100.

Namely, in this embodiment a one-time challenge (OT-CHLNG) is generated outside the secure environment 110 of the device 100, at the remote authentication server 300.

Additionally, the one-time challenge (OT-CHLNG) generation is based, at least, on a counter value (CNTR) of a device 100, as already described above, that is known at the remote authentication server 300 and at the device 100 as well.

Therefore, transmission of the one-time challenge (OT-CHLNG) from the computing device 200 to the remover server 300 is no longer necessary.

Namely, it is assumed here that a production of a device 100, the initial value of the counter (CNTR) in the device 100 is known and stored onto the counter database 800.

For instance, the initial value of the counter (CNTR) at a production of a device may consist in setting all bits of a memory unit of the programmable read-only memory 112 to 0 or 1.

Then, ever since authentication of an agent is granted to access the secure environment 110 of the device 100, the value of the memory unit of the programmable read-only memory 112, corresponding to the counter (CNTR) value, is incremented, as already described above, in the device 100 but also in the counter database 800.

For instance, let's consider that current value of a 16 bits memory unit of the programmable read-only memory 112 is expressed in decimal notation as being 3. This value would be same in the device 100 and in the counter database 800.

Therefore, after authentication of an agent, the next value of the counter (CNTR) would be 4. This value would be same in the device 100 and in the counter database 800, and so on.

This means, that at any time, the remote authentication server 300 may have the knowledge of the current value of the counter (CNTR) in the device 100.

This may be eased by the fact that the generation of the one-time challenge (OT-CHLNG) is performed at the remote authentication server 300, thus no mismatched values of the counter (CNTR) should be experienced.

However, if there is a mismatch between the values of the counter (CNTR) present in the device 100 and in the counter database 800, this could be a hint that a device 100 may have be authenticated in an uncontrolled manner. Therefore, further authentication requests could be banned for such devices 100.

Also, since the one-time challenge (OT-CHLNG) may be generated on the remote authentication server 300, the physically unalterable key 111 of device 100 may not be accessible or usable to generate a one-time challenge (OT-CHLNG) specific to a particular device 100 since the latter is only known to the device 100 and cannot be accessed from outside the secure environment 110.

Therefore, in order to guarantee that a one-time challenge (OT-CHLNG) is specific to a particular device 100, the unique device identifier ($DEV_{ID}$) of the device 100 may be used in the MAC operation as already describe above instead of the physically unalterable key 111.

In fact, at production of the device 100 the unique device identifier ($DEV_{ID}$) of the device 100 is available and may be stored in the counter database 800 along with the associated counter (CNTR).

One should also note that the one-time challenge (OT-CHLNG) need not be stored as it be generated on the fly based on, at least, the counter (CNTR).

In the following it is described in further detail the method of FIG. 6.

In one embodiment, the following phases may be carried out in order to obtain the challenge response (RESP) corresponding to the one-time challenge (OT-CHLNG) of a particular device 100:

- the computing device 200 sends to the remote authentication server 300 a device list ($DEV_{ID}$ )$_{LIST}$, retrieved for instance from a device database (not shown), for which access to secure environment 110 is requested;
- the remote authentication server 300 sends to the computing device 200 a response list (($DEV_{ID}$,RESP)$_{LIST}$) corresponding to, a list of the response (RESP) to each one-time challenge (OT-CHLNG) for the devices 100 of the device list ($DEV_{ID}$ )$_{LIST}$.
- the computing device stores the response list (($DEV_{ID}$,RESP)$_{LIST}$) into a response file 500.

The device list ($DEV_{ID}$ )$_{LIST}$ may contain one or more unique device identifier ($DEV_{ID}$).

As already described above, the second connection path 2 may be a non-secure connection path, thus the device list ($DEV_{ID}$ )$_{LIST}$ and the (($DEV_{ID}$,RESP) $_{LIST}$) may be sent, for instance, by email.

A response (RESP) corresponding to a one-time challenge (OT-CHLNG) may be generated by the remote authentication server 300, for instance, by signing the one-time challenge (OT-CHLNG) with the private key, as already explained above.

Access to the secure environment of a device 100 may be performed as already described, for instance, in FIG. 4A and FIG. 4B.

The proposed solution has been presented while mainly considering that the challenge-response authentication system may be based on an asymmetric cryptography system comprising a public key of the device associated with a private key of the remote authentication server.

However, it is also in the scope of the proposed solution to have the challenge-response authentication system being based on others cryptography systems such as a symmetric cryptography system comprising a secret key of the device, known to the remote authentication server, or derivable from a root secret key of the remote authentication server as well.

This way the overall process would performed as already described above would except that the challenge response (RESP) is signed and verified with the same secret key.

The proposed solution has also been presented while mainly considering that a challenge response (RESP) may be provided by the remote authentication server 300 as already described above.

However, it is also in the scope of the proposed solution to have the challenge response (RESP) being provided by the device 100 as well.

This may apply to devices 10 wherein, for instance, a personalisation phase is performed after the production.

In fact, during production of such devices, access to the secure the environment 110 is available without the need of any authentication, since plenty of operations which normally require authentication need to be performed at this moment. Thus, having to systematically authenticate an agent to the device during production is not convenient.

It may then be possible to use that accessibility to the secure environment to have the device 100 provide the response (RESP) to a one-time challenge (OT-CHLNG) in order to store it outside de device 100 such as in a database, for instance.

A possible implementation could consist in having the challenge response (RESP) being equal to the one-time challenge (OT-CHLNG), such as:

$$r=c \qquad (3)$$

wherein:

- c is the challenge based on at least a memory unit of a programmable read-only memory 112 as already described above; and,
- r is the response (RESP) to challenge corresponding to the challenge.

Hence, during personalisation of a device 100, wherein access to the security-sensitive applications requires authentication, one could just provide the stored challenge response (RESP) to the device 100 in order to authenticate an agent.

Once authentication is granted to the agent, one can retrieve again the challenge response for the one-time challenge (OT-CHLNG) while being in the authenticated mode of the device, sand so on as already described above.

The proposed solution has also been presented while mainly considering that a challenge (OT-CHLNG) may be generated either onto the device 100 or onto the remote authentication server 300 as already described above.

However, it is also in the scope of the proposed solution to have the challenge (OT-CHLNG) being generated elsewhere than the device 100 or the remote authentication server 300.

This could be the case, if, for instance, the device or the remote authentication server, are lacking of computing capabilities to calculate the challenges (OT-CHLNG) themselves.

This may apply, for instance, to devices being in production wherein access to the secure the environment is available without the need of any authentication, as already described above.

In fact, during production, it may be possible to have one or more challenges being comprised within an object directly stored in a secure way in a file system of the secure environment 110 of the device 100 or in a file system of the remote authentication server 300 for a particular device 100.

Hence, in this case, one may use one object comprising several one-time challenges or one object comprising a single one-time challenge.

The object may be for instance a string value or a compressed file such as ZIP file or RAR file.

Storing the object in a secure way means that the object is protected such that its integrity and authenticity can be verified prior its use.

For instance, the object may be protected by a digital signature using an asymmetric or symmetric cryptography scheme.

It is to be understood that the cryptography system used to protect the object may be different from the one used to verify the challenge response (RESP) of the corresponding one-time challenge.

In one embodiment, the object may comprise, for instance:

- a one-time challenge (OT-CHLNG);
- the current value of the memory unit of a programmable read-only memory 112; and,
- a unique device identifier of the device ($DEV_{ID}$).

In the latter case, in order for an agent to authenticate to the secure environment 110, it may be needed to verify that the object containing the challenge is valid by matching the unique device identifier of the device ($DEV_{ID}$) with the unique device identifier contained in the object.

In a second step, it may also be needed to verify that the current value of the memory unit of a programmable read-only memory 112 present in the device matches with the current value of the memory unit of a programmable read-only memory 112 contained in the object.

If both matching are positive, then the challenge is extracted and the authentication process would proceed as already described above.

In another embodiment, the object may be protected by an individual chip key accessible to the secure environment 110 using, for instance, a unique authentication code based on the individual chip key such as those already described above (i.e. a HMAC).

For this type of protection, the unique device identifier of the device ($DEV_{ID}$) need not be part of the object since the binding of the object to the device is done with the individual chip key.

Therefore, in this case the object may comprise, for instance:

- a one-time challenge (OT-CHLNG);
- the current value of the memory unit of a programmable read-only memory 112;
- a unique authentication code based on the individual chip key.

In the latter case, in order for an agent to authenticate to the secure environment 110, it may be needed to verify that the object containing the challenge is valid by matching the unique authentication code of object calculated by the device with the unique authentication code contained in the object.

In a second step, it is also needed to verify that the current value of the memory unit of a programmable read-only memory 112 present in the device matches with the current value of the memory unit of a programmable read-only memory 112 contained in the object.

If both matching are positive, then the challenge is extracted and the authentication process would proceed as already described above.

Therefore, for a particular counter value (CNTR), the one-time challenge (OT-CHLNG) may just be read from the file system of the remote authentication server or of the secure environment 110, for instance, by a challenge-provider trusted application (not shown) of the device 100.

As already explained above, ever since authentication is granted to access the secure environment 110 of a device 100, the memory unit of the programmable read-only memory 112 may be incremented in the device 100, thus a subsequent one-time challenge (OT-CHLNG) would be provided by the a challenge-provider trusted application (not shown) in response to a challenge request ($CHLNG_{REQ}$).

In the claims, the word "comprising" does not exclude other elements or steps, and the indefinite article "a" or "an" does not exclude a plurality. A single unit may fulfil the functions of several items recited in the claims.

The mere fact that different features are recited in mutually different dependent claims does not indicate that a combination of these features cannot be advantageously used.

Any reference signs in the claims should not be construed as limiting the scope of the proposed solution.

## Claims

1. Method of authenticating an agent to a secure environment (110) of a device (100), in a challenge-response authentication system comprising the device, a remote authentication server (300) and a connection path (1, 2) between the device and the remote authentication server, the method comprising:

   while the connection path is not established:

      - obtaining a predictable challenge (OT-CHNLG) based on at least a current value of a counter stored in one single memory unit of a programmable read-only memory (112) of the secure environment;
- obtaining a response (RESP) for the challenge; and,
- authenticating the agent to the secure environment based on at least the response obtained for the challenge; and,
wherein, upon successful authentication, the value of the counter stored in the single memory unit is incremented.

2. The method of claim 1, wherein the challenge is obtained in the device and is further based on, at least:

- a physically unalterable key (111) of the device, only known to the device and accessible to the secure environment.

3. The method of claim 1, wherein the challenge is obtained in the remote authentication server and is further based on, at least:

- a unique device identifier of the device ($DEV_{ID}$) that is publicly available.

4. The method of any one of claims 2 to 3, wherein the challenge is further based on, at least:

- a hash algorithm; and,
- a constant value.

5. The method of any one of claims 1 to 4, wherein the challenge is a Message Authentication Code, MAC.

6. The method of claim 1, wherein the challenge is obtained from an object stored in the secure environment of the device or in the remote authentication server, wherein the object may comprise:

- the challenge;
- the current value of the counter stored in the single memory unit; and,
- a unique device identifier of the device ($DEV_{ID}$) that is publicly available.

7. The method of claim 1, wherein the challenge is obtained from an object stored in the secure environment of the device, wherein the object may comprise:

- the challenge;
- the current value of the counter stored in the single memory unit; and,
- a unique authentication code based on an individual chip key, only known to the device and accessible to the secure environment.

8. The method of any one of claims 6 to 7, wherein the object is protected from access by an asymmetric or symmetric cryptography system.

9. The method of any one of claims 1 to 8, wherein the response is obtained in the remote authentication server based on the challenge and further based on, at least:

- a private key of the remote authentication server associated with a public key of the device; or
- a secret key of the device, known to the remote authentication server, or derivable from a root secret key of the remote authentication server.

10. The method of claim 9, wherein the response corresponds to:

- a signed version of the challenge with the private key; or
- a signed version of the challenge with the secret key.

11. The method of any one of claims 9 to 10, wherein successful authentication of the agent to the secure environment is determined by verifying the signature of the challenge, with at least:

- the public key; or,

- the secret key.

**12.** A challenge-response authentication system comprising a device (100), a remote authentication server (300) and a connection path (1, 2) between the device and the remote authentication server, the system comprising:

- the device comprises a secure environment (110) having therein:

- a programmable read-only memory (112);
- a physically unalterable key (111) of the device; and,
- a public key of the device associated with a private key of the remote authentication server or a secret key of the device, known to the remote authentication server or derivable from a root secret key of the remote authentication server;

- the remote authentication server comprises:

- a private key of the remote authentication server associated with the public key of the device or the secret key;
wherein the connection path is not established while it is performed:
- the obtaining of a challenge (OT-CHLNG) corresponding to a predictable challenge, based on at least a current value of a counter stored in one single memory unit of the programmable read-only memory;
- the obtaining of a response (RESP) for the challenge; and,
- the authentication an agent to the secure environment based on at least the response obtained for the challenge; and,
wherein, upon successful authentication, the value of a counter stored in a single memory unit of the programmable read-only memory is incremented.

**13.** The system of claim 12, wherein the challenge is a Message Authentication Code, MAC, obtained in the device and is further based on, at least:

- the physically unalterable key (111) of the device, only known to the device and accessible to the secure environment;
- a hash algorithm; and,
- a constant value.

**14.** The system of claim 12, wherein the one-time challenge is a Message Authentication Code, MAC, obtained in the remote authentication server and is further based on, at least:

- a unique device identifier of the device ($DEV_{ID}$) that is publicly available;
- a hash algorithm; and,
- a constant value.

**15.** The system of claim 12, wherein the challenge is obtained from an object stored in the secure environment of the device or in the remote authentication server, wherein the object may comprise:

- the challenge;
- the current value of the counter stored in the single memory unit; and,
- a unique device identifier of the device ($DEV_{ID}$) that is publicly available.

**16.** The system of claim 12, wherein the challenge is obtained from an object stored in the secure environment of the device, wherein the object may comprise:

- the challenge;
- the current value of the counter stored in the single memory unit; and,
- a unique authentication code based on an individual chip key, only known to the device and accessible to the secure environment.

**17.** An apparatus for authenticating an agent to a secure environment (110) of a device (100), according to any one of claims 1 to 11, in a challenge-response authentication scheme according to any one of claims 12 to 16, the apparatus comprising:

- a trusted challenge generator (TA$_{CHLNG\_GENE}$) configured to:

- receive a challenge request (CHNLG$_{REQ}$) from a challenge requester (SW$_{EMBDD}$), for obtaining the challenge (OT-CHLNG); and,
- transmit the challenge to the requester in response to the challenge request;

- a trusted authentication enabler (TA$_{AUTH}$) configured to:

- receive an access request (ACCESS$_{REQ}$) from a access requester (SW$_{EMBDD}$), for obtaining access to the secure environment (110);
- transmit an access request answer (ACCESS$_{ANS}$) to the access requester, in response to the access request; and,
- increment the current value of the single memory unit of the programmable read-only memory (112), upon successful authentication.

FIG. 1

PRIOR ART

300

2

200

RND-CHLNG

RESP

700

ACCESS$_{REQ}$

RND-CHLNG

RESP

1

FIG. 2

110

1

200

CHLNG$_{REQ}$

CMD$_{CHLNG}$

TA$_{CHLNG\_GENE}$

SW$_{EMBDD}$

OT-CHLNG

(DEV$_{ID}$, OT-CHLNG)

112

121

(DEV$_{ID}$, OT-CHLNG)

111

100

120

113

400

**FIG. 3**

**FIG. 4A**

**FIG. 4B**

114   110   121

ACCESS$_{REQ}$

TA$_{AUTH}$   SW$_{EMBDD}$   (DEV$_{ID}$, RESP)$_{LIST}$

ACCESS$_{RESP}$

500

111   112   100   120

**FIG. 5**

START

S600  OBTAINING A ONE-TIME CHALLENGE

OBTAINING A CHALLENGE RESPONSE  S601

S602  AUTHENTICATING TO THE DEVICE

END

FIG. 6

300

$(DEV_{ID}, CNTR)_{LIST}$

1

200

800

$(DEV_{ID})_{LIST}$    $(DEV_{ID}, RESP)_{LIST}$

500

$(DEV_{ID}, RESP)_{LIST}$

Europäisches
Patentamt

European
Patent Office

Office européen
des brevets

**EUROPEAN SEARCH REPORT**

Application Number

EP 13 30 5025

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 251 813 A1 (NAGRAVISION SA [CH]) 17 November 2010 (2010-11-17) * abstract; figure 1 * * paragraph [0019] - paragraph [0051] * ----- | 1-17 | INV. H04L29/06 H04L9/32 |
| X | WO 2012/005744 A1 (UNIV KING SAUD [SA]; HART BRIAN G [US]; ELDEFRAWY MOHAMED HAMDY KHALIL) 12 January 2012 (2012-01-12) * page 4; figure 1 * ----- | 1-17 | |
| | | | TECHNICAL FIELDS SEARCHED (IPC) H04L |

The present search report has been drawn up for all claims

| Place of search | Date of completion of the search | Examiner |
|---|---|---|
| The Hague | 30 May 2013 | Lamelas Polo, Yvan |

EPO FORM 1503 03.82 (P04C01)

## ANNEX TO THE EUROPEAN SEARCH REPORT
## ON EUROPEAN PATENT APPLICATION NO.

EP 13 30 5025

This annex lists the patent family members relating to the patent documents cited in the above-mentioned European search report.
The members are as contained in the European Patent Office EDP file on
The European Patent Office is in no way liable for these particulars which are merely given for the purpose of information.

30-05-2013

| Patent document cited in search report | | Publication date | Patent family member(s) | | Publication date |
|---|---|---|---|---|---|
| EP 2251813 | A1 | 17-11-2010 | CN | 102422296 A | 18-04-2012 |
| | | | EP | 2251813 A1 | 17-11-2010 |
| | | | EP | 2430583 A1 | 21-03-2012 |
| | | | JP | 2012527141 A | 01-11-2012 |
| | | | KR | 20120027215 A | 21-03-2012 |
| | | | PT | 2430583 E | 23-04-2013 |
| | | | TW | 201108027 A | 01-03-2011 |
| | | | US | 2012069991 A1 | 22-03-2012 |
| | | | WO | 2010130709 A1 | 18-11-2010 |
| WO 2012005744 | A1 | 12-01-2012 | NONE | | |

EPO FORM P0459

For more details about this annex : see Official Journal of the European Patent Office, No. 12/82